# EUROPEAN PATENT SPECIFICATION

(11) **EP 2 891 952 B1**
(45) Date of publication and mention of the grant of the patent: **29.08.2018**
(21) Application number: 14200511.5
(22) Date of filing: 30.12.2014
(51) Int. Cl.: G06F 3/01, G08C 17/02

(54) **SEAMLESS CONTENT TRANSFER**
NAHTLOSE INHALTSÜBERTRAGUNG
TRANSFERT DE CONTENU SANS SOUDURE

(30) Priority: 03.01.2014 US 201414147160
(43) Date of publication of application: 08.07.2015
(73) Proprietor: Harman International Industries, Inc., Stamford, CT 06901 (US)
(72) Inventor: di Censo, Davide, Stamford, CT 06901 (US); Marti, Stefan, Stamford, CT 06901 (US); Juneja, Ajay, Stamford, CT 06901 (US)
(74) Representative: Bertsch, Florian Oliver

(56) References cited:
- US-A1- 2009 244 015
- US-A1- 2011 163 944
- US-A1- 2012 131 458

## Description

### TECHNICAL FIELD

Embodiments generally relate to content transfer between devices, and more specifically to initiating a content transfer, based on a physical gesture performed on a first device, between the first device and another device identified by the physical gesture.

Such an embodiment is for example disclosed in document US 2012/131458 A1.

### BACKGROUND

Today interconnected devices are more common than ever before and the popularity of such devices is continuing to increase at a rapid pace. For instance, it is not uncommon for a person to have a mobile device (*e.g.,* a smart phone), a television, a tablet computing device, a media player and a vehicle navigation system that are all capable of communicating with one another (*e.g*., via Wi-Fi or Bluetooth communication). As more and more devices are built with the capability and logic to communicate with other devices, new possibilities are unlocked for providing a completely integrated experience for a user.

However, as additional devices are added to the network of devices, the task of controlling the network of devices becomes more challenging. For example, although two devices may be capable of interacting with one another (*e.g.,* a data transmission between the two devices), such a capability may not be useful if the interaction is difficult or time-consuming for a user to initiate. This is particularly true when attempting to provide an interface for less sophisticated users, who may be unwilling or unable to navigate a complex interface for controlling the devices. Thus, while the ever-expanding network of "smart" devices offers new possibilities for providing integrated experiences for users, intuitive and usable interfaces and controls for these devices are becoming increasingly important.

### SUMMARY

This need is met by the features of the independent claims. The dependent claims define embodiments.

One embodiment provides a non-transitory computer-readable medium containing computer program code that, when executed by a processor, performs an operation. The operation includes detecting a gesture performed by a user and identifying a first device. A direction in which a second device is positioned, relative to the first device, is then determined, based on at least one of 1) the detected gesture and 2) an orientation of the first device. In response to identifying the second device, content to transmit between the first device and the second device is determined. Additionally, the operation includes transmitting the content between the first device and the second device.

Another embodiment provides a non-transitory computer-readable medium containing computer program code that, when executed by a processor, performs an operation. The operation includes detecting a gesture performed by a user and that identifies a first device. The operation also includes determining a first direction that is opposite from a second direction in which the detected gesture originated, relative to the first device. Additionally, the operation includes identifying a second device that is positioned at a location in the determined first direction. Responsive to identifying the second device, content to request from the second device is determined. The operation further includes transmitting a request for the determined content to the second device.

Yet another embodiment provides an apparatus that includes a computer processor, a touch-sensitive surface, a memory containing computer program code. The computer program code, when executed by the computer processor, performs an operation that includes detecting a gesture performed by a user using the touch-sensitive surface, where the gesture originates at a first point on the touch-sensitive surface and ends at a second point on the touch-sensitive surface. Additionally, the operation includes determining a direction from the first point on the touch-sensitive surface to the second point on the touch-sensitive surface. The operation also includes, upon determining a second device is located, within a physical environment of the apparatus, in the determined direction relative to the apparatus, transmitting data to the second device. The operation further includes, upon determining a third device is located, within the physical environment, in a second direction opposite of the determined direction relative to the apparatus, transmitting a request for data to the second device.

### BRIEF DESCRIPTION OF THE DRAWINGS

So that the manner in which the above recited aspects are attained and can be understood in detail, a more particular description of embodiments of the invention, briefly summarized above, may be had by reference to the appended drawings.

It is to be noted, however, that the appended drawings illustrate only typical embodiments of this invention and are therefore not to be considered limiting of its scope, for the invention may admit to other equally effective embodiments.
Figure 1 is a block diagram illustrating a system that includes a device configured with a content transfer component, according to one embodiment described herein.
Figures 2A-B are illustrations of gestures performed on a device configured with a content transfer component, according to embodiments described herein.
Figure 3 is an illustration of a device configured with a content transfer component with the interior of a vehicle, according to one embodiment described herein.
Figure 4 is a block diagram illustrating a method for sharing content between devices based on a physical gesture, according to one embodiment described herein.
Figure 5 is a flow diagram illustrating a method for transmitting content between devices based on an orientation of a device, according to one embodiment described herein.
Figure 6 is a block diagram illustrating a system configured with a content transfer component, according to one embodiment described herein.

### DETAILED DESCRIPTION

Embodiments generally provide techniques for sharing content between devices through the use of gestures, thus simplifying the way users transfer information and processes between devices. Generally speaking, a user may wish to transfer a variety of different types of data between devices, and examples of such data types includes (without limitation) music, maps, destinations, documents, messages, contacts, ongoing phone calls and video conferences, photos, videos, and additional media content and data. Embodiments provide techniques that allow users to initiate such content transfers through the use of quick and intuitive physical gestures.

According to one embodiment, a user could perform a swiping gesture on a touch-sensitive surface of a first device and in the direction of another device within the physical environment, and responsive to the gesture, the first device could identify the other device based on the direction of the gesture. The first device could then determine content to transfer to the other device and could initiate the transfer of content to the other device. As an example, a user could be listening to music using the first device (*e.g.,* a mobile device) and, upon arriving home, the user could perform a swiping gesture on the touch-sensitive surface of the first device towards the user's home entertainment system. Logic on the first device could then detect the gesture and could identify the home entertainment system, based on the direction specified by the gesture. The logic could then determine that the home entertainment system is located in the specified direction, relative to the current physical position of the first device, and could determine content to transfer to the home entertainment system. For instance, in the current example, the logic could determine that music is currently playing on the first device, and in response, could begin streaming the music content to the home entertainment system for playback. Advantageously, doing so provides an intuitive and intelligent technique for transferring content between devices, through the use of a physical gesture.

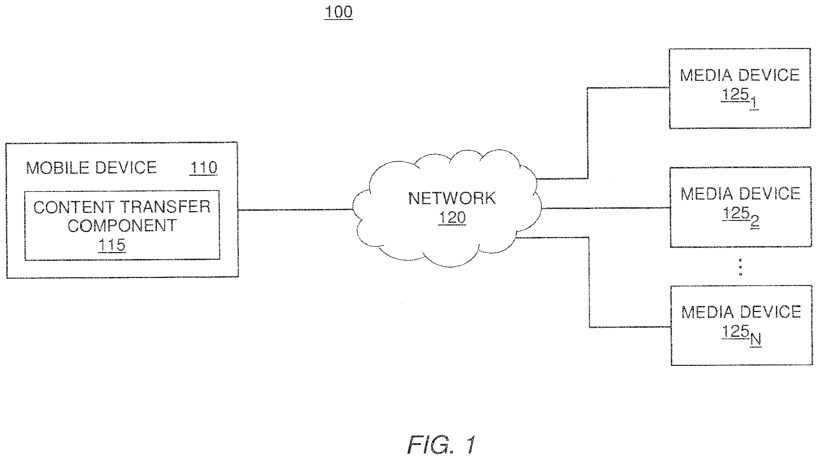

Exemplary embodiments will now be discussed with respect to Figure 1, which illustrates a system configured with a content transfer component. As shown, the system 100 includes a mobile device 110, and media devices 125_{1-N}, interconnected via a network 120. The mobile device 110 is configured with a content transfer component 115. As discussed above, the content transfer component 115 can detect when a user of the mobile device 110 performs a gesture and could identify one of the media devices 125_{1-N} corresponding to the gesture. The content transfer component 115 could then initiate a content transfer between the mobile device 110 and the identified media device 125.

For example, the media device 125₁ could be a home entertainment system that is currently playing music from a playlist. A user could perform a swiping gesture on a touch-sensitive surface of the mobile device 110 that originates at a first point and then moves away in a direction that is opposite from the direction of the media device 125₁, as if the user is pulling content from the media device 125₁ via the gesture. The content transfer component 115 could then detect the gesture and could identify the media device 125₁ as being in the direction opposite the direction specified by the gesture (*i.e.,* the gesture is moving away from the media device 125₁). In response, the content transfer component 115 could transmit a request for content to the media device 125₁. The media device 125₁ could receive the request and, in response, could determine content to transmit to the mobile device 110. For instance, the media device 125₁ could determine the content based on a current state of the media device 125₁. In this example, as the media device 125₁ is a home entertainment that is currently playing music from a playlist, the media device 125₁ could transmit the currently playing playlist to the mobile device 110. Advantageously, doing so allows a user to retrieve content from the media device 125₁ by merely performing an intuitive gesture on the mobile device 110. That is, rather than asking the owner of the media device 125₁ for a copy of the playlist, the user of the mobile device 110 can simply perform the appropriate gesture to pull a copy of the playlist from the media device 125₁.

Additionally, embodiments may be configured with security settings to control which users can transfer content to and from a particular device. For example, the media device 125₁ in the above example could be configured to allow any user to retrieve the current playlist using an appropriate gesture (*e.g.,* a pulling motion). Such a configuration may be advantageous, for instance, at a party when the owner of the media device 125₁ wishes to make the playlist available to his guests. On the other hand, the media device 125₂ could be a Wi-Fi equipped television and the owner may wish to restrict access to the media device 125₂ to only the owner's devices. Accordingly, the owner could configure the media device 125₂ to only interface with a list of particular devices.

The content transfer component 115 can be configured to determine which of media devices 125_{1-N} a particular gesture identifies in a number of ways. Generally, the content transfer component 115 is configured to determine the identified media device based on the physical position of the mobile device 110 and the physical position of the identified media device. For example, the physical positions could be determined using global positioning system (GPS) coordinates. More generally, however, any technique for determining the positions and/or relative positions of the mobile device and the media devices 125_{1-N} may be used, consistent with the functionality described herein.

The content transfer component 115 could then determine a direction specified by the gesture. Generally, the gesture comprises a linear swiping motion. For instance, the gesture may originate at a first point on a touch-sensitive surface and may end at a second point on the touch-sensitive surface. The content transfer component 115 could then determine the direction specified by the gesture by plotting a line between the first point and the second point. The content transfer component 115 could then determine a media device in the determined direction from the physical position of the mobile device 110.

In one embodiment, the content transfer component 115 can use multiple points throughout the gesture in order to determine the direction. Such an embodiment may be preferable, for instance, as the gesture is produced by a physical action performed by a user and thus the gesture may not be perfectly linear in nature. For example, the user could veer off to one side at the end of the gesture. In such a case, a line plotted between only the starting point and the ending point may be misrepresentative of the gesture as a whole. As such, the content transfer component 115 could calculate a best fit line that corresponds to the substantially linear gesture motion using multiple sampling points throughout the gesture, and could use the best fit line to determine which media device is identified by the gesture. As discussed above, a gesture can identify a media device by either swiping towards a media device (*e.g.,* a pushing motion in the direction of the media device, relative to the position of the mobile device 110) or away from the media device (*e.g.,* a pulling motion in the opposite direction of the media device, relative to the position of the mobile device 110).

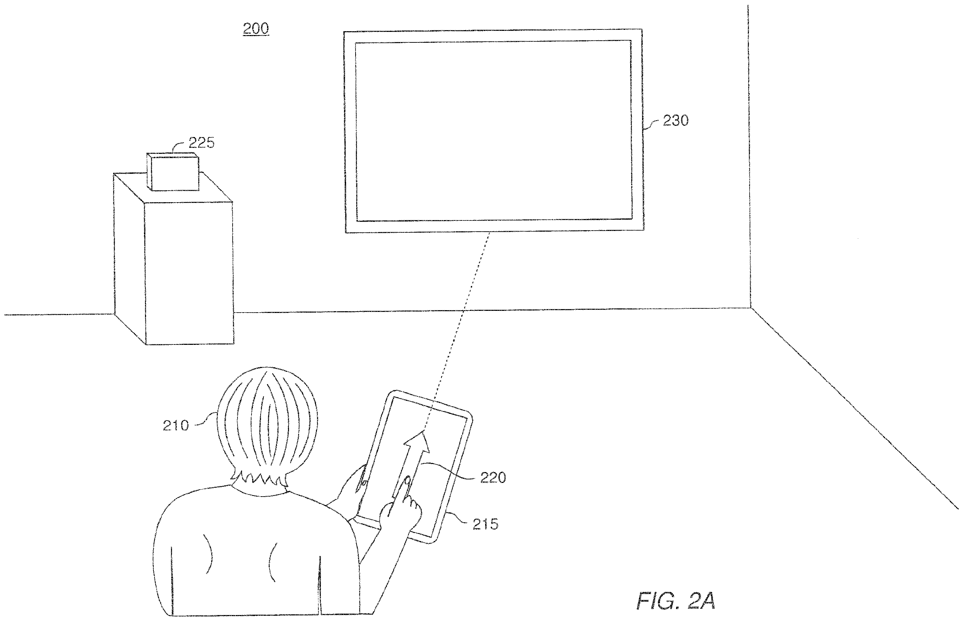

Figures 2A-B are illustrations showing users initiating content transfers using swiping gestures. As shown, Figure 2A is an illustration 200 that shows a user 210, a media player device 225 and a television 230. The user as shown is holding a mobile device 215. Additionally, the user 210 is shown as performing a gesture 220 on a touch-sensitive surface of the mobile device 215. The content transfer component 115 could determine a direction specified by the gesture 220 and could determine which of the media device 225 and 230 corresponds to the determined direction, relative to the position of the mobile device 215. As shown in this example, the gesture 220 specifies the direction of the television 230 relative to the position of the mobile device 215.

As discussed above, upon identifying that the television 230 is identified by the performed gesture 220, the content transfer component 115 could determine content to transfer to the television 230. For example, the content transfer component 115 could determine a current state of the mobile device 215 and could determine the content to transfer based on the current state. For example, the content transfer component 115 could determine that a video file is currently playing on the mobile device 215, and responsive to the gesture 220, could begin streaming the currently playing video to the television 230 for playback.

As another example, the gesture 220 could specify the content to be transferred to the television 230. For instance, the gesture 220 could originate at a first point on the touch-sensitive surface of the mobile device 215, and the content transfer component 115 could identify content displayed on the touch-sensitive surface that corresponds to the first point. As an example, a user could begin the gesture 220 at a point of the user-interface of the mobile device 215 that corresponds to a particular file (*e.g.,* a movie file) stored on the mobile device 215. The content transfer component 115 could then determine that the file should be streamed to the television 230, based on the performed gesture, and could initiate a transfer of the identified content to the television 230.

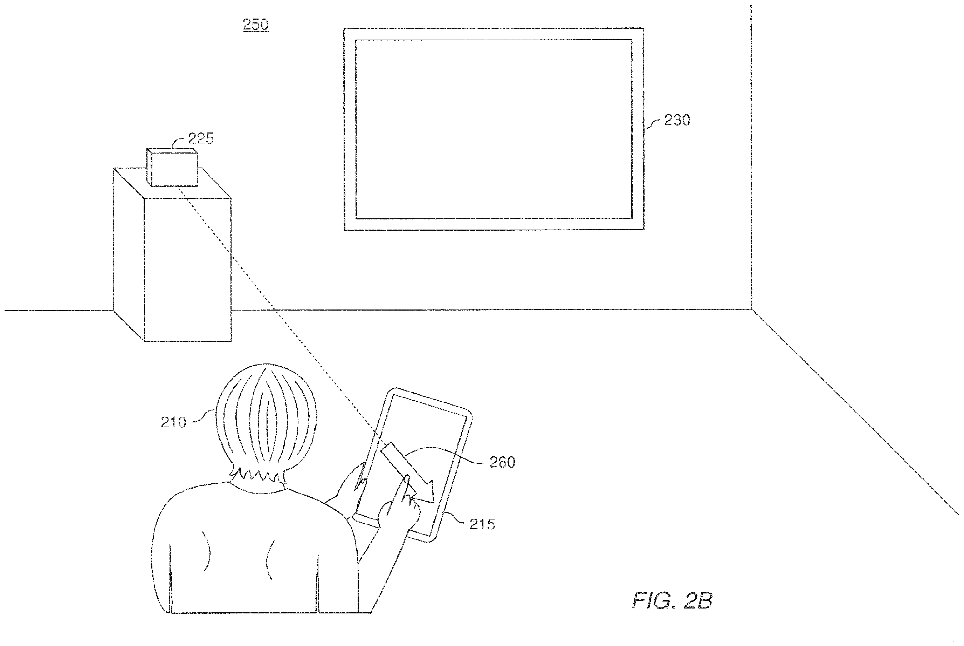

Figure 2B is an illustration depicting the user performing a pulling gesture to initiate a content transfer between devices. As shown, the illustration 250 includes the user 210, media player device 225 and television 230. Additionally, the user 210 is again holding the mobile device 215, and here the user has performed the gesture 260 on a touch-sensitive surface of the mobile device 215. In this example, the gesture 260 is in the opposite direction of the media device 226, relative to the position of the mobile device 215. Here, the content transfer component 115 could determine the direction specified by the gesture 260 (*i.e.,* the direction from the starting point of the gesture 260 to the ending point of the gesture 260) and could determine that no devices are located in the determined direction, relative to the position of the mobile device 215. The content transfer component 115 could then determine the opposite direction of the determined direction (*i.e.,* 180 degrees from the determined direction) and could determine whether any devices are located in the opposite direction, relative to the position of the mobile device 215. Thus, in this example, the content transfer component 115 would identify the media player device 225 as being in the opposite direction of the direction specified by the gesture 260.

In response to identifying the media player device 225, the content transfer component 115 could transmit a request to the media player device 225 requesting content. Upon receiving the request, the media player device 225 could then determine content to transfer to the mobile device 215 and could initiate the transfer of said content to the mobile device 215. For example, the media player device 225 could be playing a particular song at the time the gesture 260 is performed, and upon receiving the request for content from the content transfer component 115, the media player device 225 could transmit metadata describing the particular song to the mobile device 215. Such metadata could include the song name, the artist performing the song, the album the song appears on, and so on. Advantageously, doing so allows the user 210 to quickly identify the song playing on the media player device 225, by performing an intuitive gesture on the mobile device 215.

In addition to identifying target media devices based on a direction specified by the gesture, the content transfer component 115 can be configured to identify media devices based on an orientation of the mobile device 215. For example, the orientation of the mobile device 215 could be determined using a particular reference point on the mobile device 215 (*e.g.,* 90 degrees outwards from a top surface of the mobile device 215). The content transfer component 115 could be configured to indicate the device's 215 orientation, *e.g*., using an arrow displayed in a graphical user interface of the device 215. Upon detecting a gesture has been performed on the mobile device 215, the content transfer component 115 could identify a media device oriented in the direction the mobile device 215 is oriented. Advantageously, by using the device's orientation to determine the direction of the target media device, the content transfer component 115 can recognize additional types of gestures, as the gestures are not required to specify the direction of the target media device.

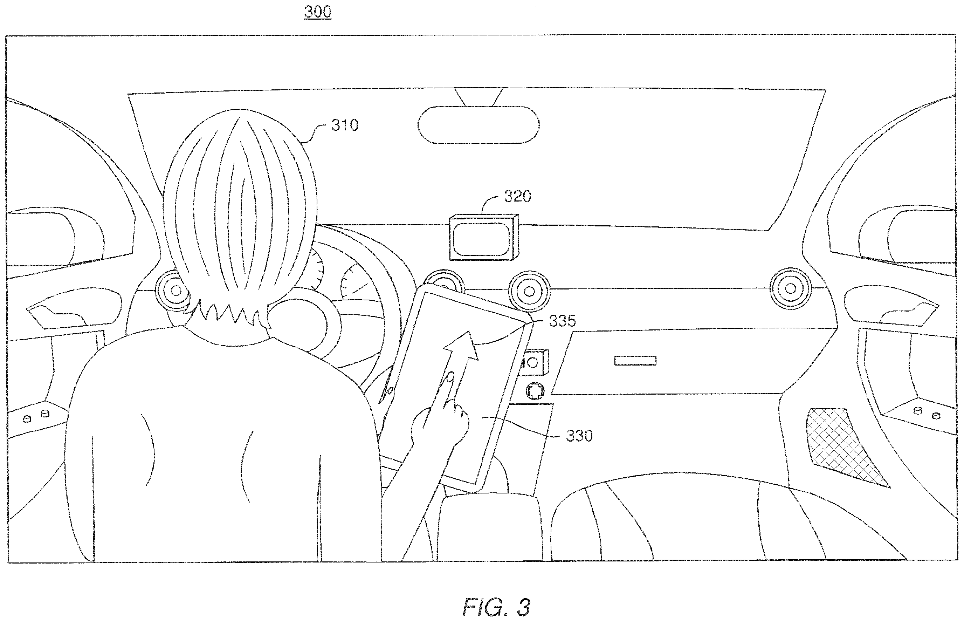

Additionally, the content transfer component 115 can be configured for use with devices within a vehicle. An example of this is depicted in Figure 3, which is an illustration 300 of a vehicle interior that includes a user 310 holding a mobile device 330. The vehicle is configured with a display device 320, which can be used to display an interface for a navigation system. Here, the user has performed a swiping gesture 335 on the touch-sensitive surface of the mobile device 330, in the direction of the display device 320 relative to the position of the mobile device 330. A content transfer component 115 on the mobile device 330 could detect the gesture 335 and could determine that the display device 320 is positioned in the direction specified by the gesture, relative to the position of the mobile device 330. The content transfer component 115 could then determine data to transmit to the display device 320. For example, the gesture 335 could originate at a place on the touch-sensitive surface of the mobile device 330 that corresponds to address information currently being displayed on the touch-sensitive surface. In response, the content transfer component 115 could transmit the address information to the mobile device 320. The display device 320, in response to receiving the address information, could initiate navigation services to a geographic position corresponding to the received address information. Doing so allows a user to configure a vehicle's navigation system with destination information through the use of an intuitive physical gesture.

In one embodiment, the content transfer component 115 is configured to detect the gesture 335 using one or more camera devices (*e.g*., positioned within the vehicle interior shown in the illustration 300). For instance, the user could perform a physical gesture that originates approximately at the position of the mobile device 330 and proceeds in the direction of the display device 320. A set of camera devices could capture video data of the user's movement and the content transfer component 115 could analyze the captured video data to detect the gesture 335. The content transfer component 115 could then determine whether the gesture indicates that transfer should be transferred from the mobile device 330 to the display device 320 or whether the gesture indicates content should be requested from the display device 320 by the mobile device 330. In the present example, the gesture 335 is in the direction of the display device 320, relative to the position of the mobile device 330, and thus the content transfer component 115 could determine that the gesture indicates content should be transmitted to the display device 320. Advantageously, by detecting the gesture through the use of camera devices, the content transfer component 115 enables the use of gestures for content transfers even on devices that are not configured with a touch-sensitive surface.

Moreover, although only a single user and a single mobile device are shown in the illustration 300, it is broadly contemplated that the display device 320 can receive requests from a number of different devices controlled by different users within the vehicle. For instance, each of the different devices could be configured with a content transfer component 115, and the users within the vehicle could perform gestures on their respective devices to transmit media content to the display device 320 for playback. As an example, the users within the vehicle could dynamically build a playlist by each performing gestures on their respective mobile devices to transmit audio files to the display device 320, and the display devices 320 could construct a playlist that plays back the audio files via the speakers within the vehicle. In one embodiment, the content transfer component 115 on the various mobile devices are configured to transmit indications (*e.g*., links) of the audio files to the display device 320, rather than transmitting the actual audio files themselves. When logic on the display device 320 subsequently determines that a particular audio file should be played back via the vehicle's speakers (*e.g*., when a point in the playlist corresponding to the particular audio file is reached), the logic on the display device 320 could request the particular audio file be streamed in real-time from the corresponding mobile device. Advantageously, doing so provides a fun and intuitive way for users to control a vehicle's entertainment system, and also avoids distracting the driver of the vehicle from having to manually control the entertainment system.

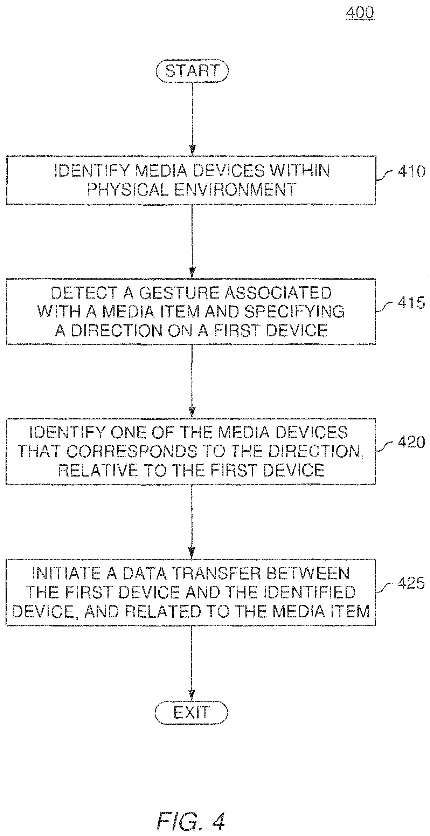

Figure 4 is a block diagram illustrating a method for sharing content between devices based on a physical gesture, according to one embodiment described herein. As shown, the method 400 begins at block 410, where the content transfer component 115 identifies one or more media devices within a proximate physical environment 410. For instance, the content transfer component 115 could restrict the proximate physical environment 410 to only those devices that are within the same room as the device on which the content transfer component 115 is executing. As an example, the content transfer component 115 could be configured to transmit a signal known not to pass through obstacles such as walls (*e.g.,* an infrared signal) and any media devices receiving such a signal could be configured to transmit an acknowledgement signal to the content transfer component 115. Upon receiving such an acknowledgement signal from a particular media device, the content transfer component 115 could determine that the media device is within the same room as the device the content transfer component 115 is executing on, and thus the media device is available for gesture-based content transfers.

The content transfer component 115 then detects a gesture specifying a direction on a first device on which the content transfer component 115 is executing (block 415). As discussed above, the direction can be determined based on the gesture's starting and ending points, and may include one or more intervening points as well. Once the direction is determined, the content transfer component 115 identifies a media devices corresponding to the determined direction, relative to the current physical position of the device on which the content transfer component 115 is executing (block 420). As discussed above, if the content transfer component 115 determines a media device is located in the determined direction, the content transfer component 115 could determine that the gesture is a "push" gesture indicating that content should be transmitted to the identified device. On the other hand, if the content transfer component 115 determines that a media devices is located in a direction opposite of the determined direction (*e.g*., approximately 180 degrees from the determined direction), the content transfer component 115 could determine that the gesture is a "pull" gesture indicating that data should be requested from the identified device.

Additionally, the content transfer component 115 can determine the content to transfer or to request from the identified device. In the method 400, the content transfer component 115 initiates a data transfer between the first device on which the content transfer component 115 is executing and a separate device identified by the gesture (block 425), and the method 400 ends. For instance, the content transfer component 115 could determine that the gesture is a "push" gesture and could determine a current state of the device on which the content transfer component 115 is executing. In such an example, the content transfer component 115 could determine that the device is currently playing a particular media item (*e.g.,* an audio file) and, responsive to the gesture, could pause the playback of the media item at a first playback position and could begin streaming the media item to the device identified by the gesture for playback at the first playback position. Doing so provides a seamless transfer of the playback of the media item from the device on which the content transfer component 115 is executing (*e.g*., a mobile device) to a separate device, through the use of a quick and intuitive physical gesture.

In one embodiment, upon detecting the gesture is a "pull" gesture, the content transfer component 115 is configured to transmit a request for content to the identified media device, and logic on the identified media device is configured to determine content to transmit to the content transfer component 115 based on the identified media device's current state. For example, the identified media device could return a current playlist or metadata describing a currently playing song to the content transfer component 115, in response to receiving the request.

As another example, the content transfer component 115 could transmit a request for specific content from the identified media device, as specified by the gesture. For example, the gesture could begin at a starting point of a touch-sensitive surface that corresponds to a particular user interface element being displayed on the touch-sensitive surface, and the content transfer component 115 could determine the content to request based on the particular user interface element. As an example, the content transfer component 115 could display a user interface that includes a number of user interface elements (*e.g*., buttons), each corresponding to a different type of request that available media devices are capable of satisfying. The user could then indicate which type of request the user wishes to transmit to the identified media device, by beginning the gesture at a point on the user interface corresponding to a particular user interface element. Advantageously, doing so provides the user more control over the actions taken as a result of the gesture.

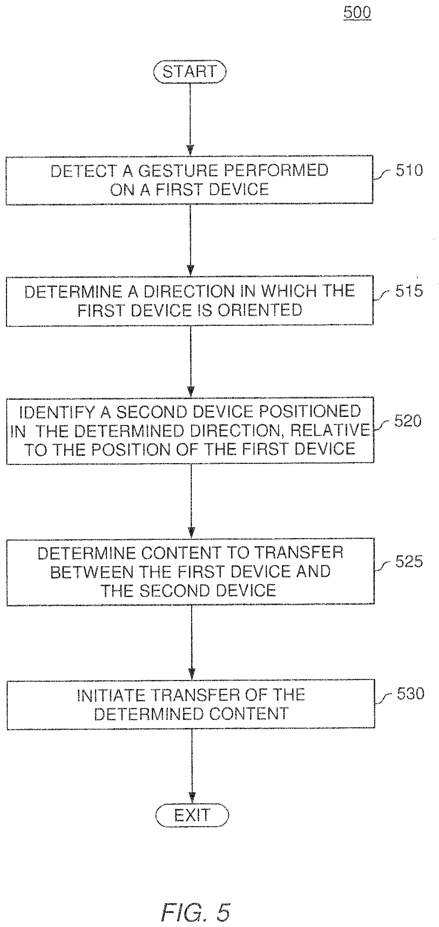

Figure 5 is a flow diagram illustrating a method for transmitting content between devices based on an orientation of a device, according to one embodiment described herein. As shown, the method 500 begins at block 510, where the content transfer component 115 detects a gesture performed on a first device. For example, the gesture could be performed on a touch-sensitive surface of the first device, and the content transfer component 115 could detect the gesture based on input data collected from the touch-sensitive surface. As another example, the content transfer component 115 could detect the gesture using one or more cameras capturing the user's movement from various angles.

Upon detecting the gesture has been performed, the content transfer component 115 determines a direction in which the first device is oriented (block 515). For instance, the orientation can be measured from a fixed point on the first device (*e.g.,* a top portion of the device). Additionally, the content transfer component 115 may indicate to a user which point on the first device the orientation is measured from, *e.g*., via a user interface displayed on the first device, so that the user understands how to properly orient the device. The content transfer component 115 then identifies a second device positioned within the physical environment in the determined direction, relative to the position of the first device (block 520). As discussed above, the content transfer component 115 can be configured to restrict the set of devices to which the first device can communicate via gestures to only those devices within the same physical environment as the first device (*e.g*., within the same room as the first device). Doing so prevents the user from unintentionally affecting another user's device (*e.g.,* in an adjacent apartment or in another room of a house) through the use of a gesture.

The content transfer component 115 also determines content to transfer between the first device and the second device (block 525). For example, the content transfer component 115 can determine the content to transfer based at least in part on the gesture performed by the user. For instance, the content transfer component 115 can be configured to recognize multiple distinct gestures, with each gesture corresponding to a different action to be performed by the content transfer component 115. It is broadly contemplated that the content transfer component 115 can react to any sort of gesture performed by a user, and embodiments described herein are not limited to any specific type of gesture.

Additionally, the content transfer component 115 can determine the content to transfer between the devices based on a current state of one of the devices. For example, an infotainment device could be configured to play music according to a particular playlist during a party, and the owner of the home entertainment device could configure the device to provide a copy of the playlist to any users who request the playlist through the user of a gesture.

The content transfer component 115 then initiates a transfer of the determined content between the first device and the second device (block 530), and the method 500 ends. As discussed above, the data transfer can be from the first device to the second device, from the second device to the first device, or a combination of both. For example, upon retrieving a copy of the playlist from the infotainment device, a user of the first device could make an alteration to the playlist by adding a new song. The content transfer component 115 on the first device could then transmit the modified playlist back to the infotainment system, and if the new song is available for playback (*e.g*., via a local library, via steaming from a cloud computing environment, *etc.*), the infotainment system could playback the newly added song when the appropriate position on the playlist is reached. In one embodiment, the infotainment system may require a confirmation of the playlist modification from an owner of the infotainment system, before scheduling the newly added song for playback.

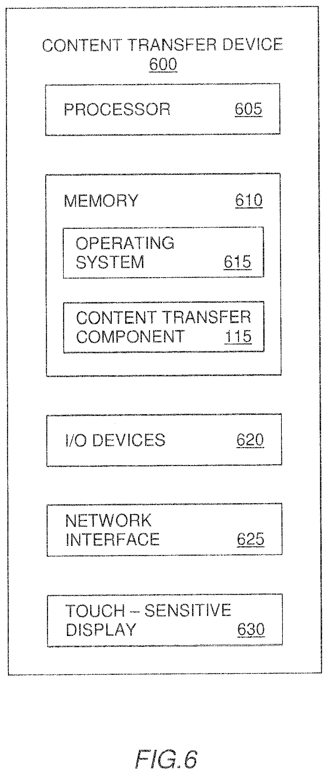

Figure 6 is a block diagram illustrating a device configured with a content transfer component, according to one embodiment described herein. In this example, the content transfer device 600 includes, without limitation, a processor 605, memory 610, I/O devices 620, a network interface 625 and a touch-sensitive display device 630. Generally, the processor 605 retrieves and executes programming instructions stored in the memory 610. Processor 605 is included to be representative of a single CPU, multiple CPUs, a single CPU having multiple processing cores, GPUs having multiple execution paths, and the like. The memory 610 is generally included to be representative of a random access memory. The network interface 625 enables the content transfer device 150 to connect to a data communications network (*e.g*., wired Ethernet connection or an 802.11 wireless network). The device 600 may further include a Bluetooth transceiver module for use in communicating with other devices. Further, while the depicted embodiment illustrates the components of a content transfer device 600, one of ordinary skill in the art will recognize that embodiments may use a variety of different hardware architectures. Moreover, it is explicitly contemplated that embodiments may be implemented using any device or computer system capable of performing the functions described herein.

The memory 610 represents any memory sufficiently large to hold the necessary programs and data structures. Memory 610 could be one or a combination of memory devices, including Random Access Memory, nonvolatile or backup memory (*e.g*., programmable or Flash memories, read-only memories, *etc.*). In addition, memory 610 may be considered to include memory physically located elsewhere; for example, on another computer or device communicatively coupled to the content transfer device 600. Illustratively, the memory 610 includes an operating system 615 and a content transfer component 115. The operating system 615 generally controls the execution of application programs on the device 600. Examples of operating system 615 include UNIX, a version of the Microsoft Windows® operating system, and distributions of the Linux® operating system. Additional examples of operating system 615 include custom operating systems for gaming consoles, including the custom operating systems for systems such as the Nintendo DS® and Sony PSP®.

The I/O devices 620 represent a wide variety of input and output devices, including displays, keyboards, touch screens, and so on. For instance, the I/O devices 620 may include a set of buttons, switches or other physical device mechanisms for controlling the device 600. For example, the I/O devices 620 could include a set of directional buttons used to control aspects of a video game played using the device 600.

The touch-sensitive display 630 can be used for outputting a graphical user interface for the device 600 (*e.g.,* an interface generated by the operating system 615 in conjunction with the content transfer component 115), and can also be used to detect gestures performed by a user of the device 600. For example, the content transfer component 115 could detect a swiping gesture performed on the touch-sensitive display, where the gesture originates at a first point on the touch-sensitive surface and ends at a second point on the touch-sensitive surface of the display 630. The content transfer component 115 could then determine a direction from the first point on the touch-sensitive surface to the second point on the touch-sensitive surface. If the content transfer component 115 determines that a second device is located, within a physical environment of the apparatus, in the determined direction relative to the apparatus, the content transfer component 115 could transmit content to the second device. If instead the content transfer component 115 determines that a third device is located, within the physical environment, in a second direction opposite of the determined direction relative to the apparatus, the content transfer component 115 could transmit a request for data to the second device.

In the preceding, reference is made to embodiments of the invention. However, it should be understood that the present disclosure is not limited to specific described embodiments. Instead, any combination of the aforementioned features and elements, whether related to different embodiments or not, is contemplated to implement and practice the invention. Furthermore, although embodiments of the invention may achieve advantages over other possible solutions and/or over the prior art, whether or not a particular advantage is achieved by a given embodiment is not limiting of the present disclosure. Thus, the aforementioned aspects, features, embodiments and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, the aspects described herein may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the aspects described herein may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Embodiments of the invention may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (*e.g*., servers, storage, networks), enabling convenient, on-demand network access to a shared pool of configurable computing resources that can be rapidly provisioned and released with minimal management effort or service provider interaction. Thus, cloud computing allows a user to access virtual computing resources (*e.g*., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (*e.g.* an amount of storage space consumed by a user or a number of virtualized systems instantiated by the user). A user can access any of the resources that reside in the cloud at any time, and from anywhere across the Internet. In context of the present invention, a user could retrieve data from a remote device through the use of a "pull" gesture on a device configured with a content transfer component 115. The content transfer component 115 could then transmit the retrieved data to a cloud applications deployed in a cloud computing environment. The cloud application could then store the data and could make the data available to the user upon request. Doing so allows a user to access this information from any computing system attached to a network connected to the cloud (*e.g.,* the Internet).

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the foregoing is directed to embodiments of the present invention, other and further embodiments of the invention may be devised without departing from the basic scope thereof, and the scope thereof is determined by the claims that follow.

## Claims

1. A non-transitory computer-readable medium containing computer program code that, when executed by a processor, configures the processor to perform the steps of:
detecting a gesture (220, 260, 330) performed by a user (210, 310) and identifying a first device (110, 125_{1-N}, 215, 230, 225, 320, 330);
in response to detecting the gesture (220, 260, 330), determining a direction in which the first device (110, 125_{1-N}, 215, 230, 225, 320, 330) is oriented based on a reference point on the first device;
identifying a second device (110, 125_{1-N}, 215, 230, 225, 320, 330) that is located in the direction in which the first device is oriented and is present in the same physical environment as the first device;
responsive to identifying the second device (110, 125_{1-N}, 215, 230, 225, 320, 330), determining content to transmit between the first device (110, 125_{1-N}, 215, 230, 225, 320, 330) and the second device (110, 125_{1-N}, 215, 230, 225, 320, 330); and
transmitting the content from the first device (110, 125_{1-N}, 215, 230, 225, 320, 330) to the second device (110, 125_{1-N}, 215, 230, 225, 320, 330).

2. The non-transitory computer-readable medium of claim 1,
wherein the first device (110, 125_{1-N}, 215, 230, 225, 320, 330) is identified by the gesture (220, 260, 330) being performed on a touch-sensitive surface of the first device (110, 125_{1-N}, 215, 230, 225, 320, 330).

3. The non-transitory computer-readable medium of claims 1 or 2,
wherein the gesture (220, 260, 330) is detected using one or more camera devices, and wherein the first device (110, 125_{1-N}, 215, 230, 225, 320, 330) is identified by a starting point of the gesture (220, 260, 330) being proximate to the first device (110, 125_{1-N}, 215, 230, 225, 320, 330).

4. The non-transitory computer-readable medium of any of the preceding claims,
wherein determining content to transmit between the first device (110, 125_{1-N}, 215, 230, 225, 320, 330) and the second device (110, 125_{1-N}, 215, 230, 225, 320, 330) is based on at least one of 1) a current state of the first device (110, 125_{1-N}, 215, 230, 225, 320, 330) and 2) a current state of the second device (110, 125_{1-N}, 215, 230, 225, 320, 330).

5. The non-transitory computer-readable medium of claim 4,
wherein the current state comprises media content currently playing on the first device (110, 125_{1-N}, 215, 230, 225, 320, 330), and wherein transmitting the content comprises transmitting the media content to the second device (110, 125_{1-N}, 215, 230, 225, 320, 330) for playback.

6. The non-transitory computer-readable medium of any of the preceding claims,
wherein determining content to transmit to the second device (110, 125_{1-N}, 215, 230, 225, 320, 330) is based on the determined content being identified by the detected gesture (220, 260, 330), and
wherein the detected gesture (220, 260, 330) is one of a plurality of distinct gestures, each corresponding to a different type of content transfer between the first device (110, 125_{1-N}, 215, 230, 225, 320, 330) and the second device (110, 125_{1-N}, 215, 230, 225, 320, 330).

7. The non-transitory computer-readable medium of any of the preceding claims,
wherein the detected gesture (220, 260, 330) is a linear swiping gesture originating at the first device (110, 125_{1-N}, 215, 230, 225, 320, 330) and ending at a point located in the direction in which the first device is oriented.

8. The non-transitory computer-readable medium of any of the preceding claims,
wherein the content comprises address information, and wherein transmitting the content from the first device (110, 125_{1-N}, 215, 230, 225, 320, 330) to the second device (110, 125_{1-N}, 215, 230, 225, 320, 330) comprises transmitting the address to the second device (110, 125_{1-N}, 215, 230, 225, 320, 330) for use in determining a route to a location corresponding to the address information.

9. An apparatus, comprising:
a computer processor;
a touch-sensitive surface; and
a memory containing computer program code that, when executed by the computer processor, performs the steps of any of claims 1-8.

## Patentansprüche

1. Nichtflüchtiges, computerlesbares Medium, enthaltend Computerprogrammcode, der, wenn er von einem Prozessor ausgeführt wird, den Prozessor konfiguriert, sodass er die folgenden Schritte durchführt:
Erfassen einer Geste (220, 260, 330), die von einem Benutzer (210, 310) durchgeführt wird und Identifizieren eines ersten Geräts (110, 125_{1-N}, 215, 230, 225, 320, 330);
als Reaktion auf das Erfassen der Geste (220, 260, 330) Bestimmen einer Richtung, in der das erste Gerät (110, 125_{1-N}, 215, 230, 225, 320, 330) ausgerichtet ist, auf Grundlage eines Referenzpunktes auf dem ersten Gerät;
Identifizieren eines zweiten Geräts (110, 125_{1-N}, 215, 230, 225, 320, 330), das sich in der Richtung befindet, in der das erste Gerät ausgerichtet ist und in derselben physischen Umgebung wie das erste Gerät vorhanden ist;
als Reaktion auf das Identifizieren des zweiten Geräts (110, 125_{1-N}, 215, 230, 225, 320, 330) Bestimmen von Inhalt zum Übertragen zwischen dem ersten Gerät (110, 125_{1-N}, 215, 230, 225, 320, 330) und dem zweiten Gerät (110, 125_{1-N}, 215, 230, 225, 320, 330); und
Übertragen des Inhalts von dem ersten Gerät (110, 125_{1-N}, 215, 230, 225, 320, 330) auf das zweite Gerät (110, 125_{1-N}, 215, 230, 225, 320, 330).

2. Nichtflüchtiges, computerlesbares Medium nach Anspruch 1, wobei das erste Gerät (110, 125_{1-N}, 215, 230, 225, 320, 330) durch die Geste (220, 260, 330) identifiziert wird, die auf einer berührungsempfindlichen Oberfläche des ersten Geräts (110, 125_{1-N}, 215, 230, 225, 320, 330) durchgeführt wird.

3. Nichtflüchtiges, computerlesbares Medium nach Anspruch 1 oder 2,
wobei die Geste (220, 260, 330) unter Verwendung einer oder mehrerer Kamerageräte erfasst wird, und wobei das erste Gerät (110, 125_{1-N}, 215, 230, 225, 320, 330) dadurch identifiziert wird, dass ein Ausgangspunkt der Geste (220, 260, 330) nahe dem ersten Gerät (110, 125_{1-N}, 215, 230, 225, 320, 330) ist.

4. Nichtflüchtiges, computerlesbares Medium nach einem der vorhergehenden Ansprüche,
wobei das Bestimmen von Inhalt zum Übertragen zwischen dem ersten Gerät (110, 125_{1-N}, 215, 230, 225, 320, 330) und dem zweiten Gerät (110, 125_{1-N}, 215, 230, 225, 320, 330) auf zumindest einem von 1) einem aktuellen Zustand des ersten Geräts (110, 125_{1-N}, 215, 230, 225, 320, 330) und 2) einem aktuellen Zustand des zweiten Geräts (110, 125_{1-N}, 215, 230, 225, 320, 330) basiert.

5. Nichtflüchtiges, computerlesbares Medium nach Anspruch 4, wobei der aktuelle Zustand Medieninhalt umfasst, der aktuell auf dem ersten Gerät (110, 125_{1-N}, 215, 230, 225, 320, 330) abgespielt wird und wobei das Übertragen des Inhalts das Übertragen des Medieninhalts auf das zweite Gerät (110, 125_{1-N}, 215, 230, 225, 320, 330) zur Wiedergabe umfasst.

6. Nichtflüchtiges, computerlesbares Medium nach einem der vorhergehenden Ansprüche,
wobei das Bestimmen von Inhalt zum Übertragen auf das zweite Gerät (110, 125_{1-N}, 215, 230, 225, 320, 330) auf dem bestimmten Inhalt basiert, der durch die erfasste Geste (220, 260, 330) identifiziert wird, und
wobei die erfasste Geste (220, 260, 330) eine aus einer Vielzahl einzelner Gesten ist, wobei jede einer anderen Art von Inhaltsübertragung zwischen dem ersten Gerät (110, 125_{1-N}, 215, 230, 225, 320, 330) und dem zweiten Gerät (110, 125_{1-N}, 215, 230, 225, 320, 330) entspricht.

7. Nichtflüchtiges, computerlesbares Medium nach einem der vorhergehenden Ansprüche,
wobei die erfasste Geste (220, 260, 330) eine lineare Wischgeste ist, die von dem ersten Gerät (110, 125_{1-N}, 215, 230, 225, 320, 330) ausgeht und an einem Punkt endet, der sich in der Richtung befindet, in der das erste Gerät ausgerichtet ist.

8. Nichtflüchtiges, computerlesbares Medium nach einem der vorhergehenden Ansprüche,
wobei der Inhalt Adressinformationen umfasst und wobei das Übertragen des Inhalts von dem ersten Gerät (110, 125_{1-N}, 215, 230, 225, 320, 330) auf das zweite Gerät (110, 125_{1-N}, 215, 230, 225, 320, 330) das Übertragen der Adresse auf das zweite Gerät (110, 125_{1-N}, 215, 230, 225, 320, 330) zur Verwendung beim Bestimmen einer Strecke zu einem Standort entsprechend den Adressinformationen umfasst.

9. Vorrichtung, umfassend:
einen Computerprozessor;
eine berührungsempfindliche Oberfläche; und
einen Speicher, der Computerprogrammcode enthält, der, wenn er von dem Computerprozessor ausgeführt wird, die Schritte nach einem der Ansprüche 1-8 durchführt.

## Revendications

1. Support lisible par ordinateur non transitoire contenant un code de programme informatique qui, quand il est exécuté par un processeur, configure le processeur pour effectuer les étapes suivantes :
la détection d'un geste (220, 260, 330) effectué par un utilisateur (210, 310) et l'identification d'un premier dispositif (110, 125_{1-N}, 215, 230, 225, 320, 330) ;
en réponse à la détection du geste (220, 260, 330), la détermination d'une direction dans laquelle le premier dispositif (110, 125_{1-N}, 215, 230, 225, 320, 330) est orienté sur la base d'un point de référence sur le premier dispositif ;
l'identification d'un deuxième dispositif (110, 125_{1-N}, 215, 230, 225, 320, 330) qui est situé dans la direction dans laquelle le premier dispositif est orienté et est présent dans le même environnement physique que le premier dispositif ;
en réponse à l'identification du deuxième dispositif (110, 125_{1-N}, 215, 230, 225, 320, 330), la détermination d'un contenu à transmettre entre le premier dispositif (110, 125_{1-N}, 215, 230, 225, 320, 330) et le deuxième dispositif (110, 125_{1-N}, 215, 230, 225, 320, 330) ; et
la transmission du contenu du premier dispositif (110, 125_{1-N}, 215, 230, 225, 320, 330) au deuxième dispositif (110, 125_{1-N}, 215, 230, 225, 320, 330).

2. Support lisible par ordinateur non transitoire selon la revendication 1,
dans lequel le premier dispositif (110, 125_{1-N}, 215, 230, 225, 320, 330) est identifié par le geste (220, 260, 330) qui est effectué sur une surface tactile du premier dispositif (110, 125_{1-N}, 215, 230, 225, 320, 330).

3. Support lisible par ordinateur non transitoire selon la revendication 1 ou 2,
dans lequel le geste (220, 260, 330) est détecté en utilisant un ou plusieurs dispositifs de caméra, et dans lequel le premier dispositif (110, 125_{1-N}, 215, 230, 225, 320, 330) est identifié par un point de départ du geste (220, 260, 330) qui est à proximité du premier dispositif (110, 125_{1-N}, 215, 230, 225, 320, 330).

4. Support lisible par ordinateur non transitoire selon l'une quelconque des revendications précédentes,
dans lequel la détermination d'un contenu à transmettre entre le premier dispositif (110, 125_{1-N}, 215, 230, 225, 320, 330) et le deuxième dispositif (110, 125_{1-N}, 215, 230, 225, 320, 330) est basée sur au moins un parmi 1) un état actuel du premier dispositif (110, 125_{1-N}, 215, 230, 225, 320, 330) et 2) un état actuel du deuxième dispositif (110, 125_{1-N}, 215, 230, 225, 320, 330).

5. Support lisible par ordinateur non transitoire selon la revendication 4,
dans lequel l'état actuel comprend un contenu multimédia actuellement reproduit sur le premier dispositif (110, 125_{1-N}, 215, 230, 225, 320, 330) et dans lequel la transmission du contenu comprend la transmission du contenu multimédia au deuxième dispositif (110, 125_{1-N}, 215, 230, 225, 320, 330) pour la lecture.

6. Support lisible par ordinateur non transitoire selon l'une quelconque des revendications précédentes,
dans lequel la détermination d'un contenu à transmettre au deuxième dispositif (110, 125_{1-N}, 215, 230, 225, 320, 330) est basé sur le contenu déterminé qui est identifié par le geste détecté (220, 260, 330), et
dans lequel le geste détecté (220, 260, 330) est l'un d'une pluralité de gestes distincts, correspondant chacun à un type différent de transfert de contenu entre le premier dispositif (110, 125_{1-N}, 215, 230, 225, 320, 330) et le deuxième dispositif (110, 125_{1-N}, 215, 230, 225, 320, 330).

7. Support lisible par ordinateur non transitoire selon l'une quelconque des revendications précédentes,
dans lequel le geste détecté (220, 260, 330) est un geste de glissement linéaire commençant au niveau du premier dispositif (110, 125_{1-N}, 215, 230, 225, 320, 330) et se terminant en un point situé dans la direction dans laquelle le premier dispositif est orienté.

8. Support lisible par ordinateur non transitoire selon l'une quelconque des revendications précédentes,
dans lequel le contenu comprend des informations d'adresse et dans lequel la transmission du contenu du premier dispositif (110, 125_{1-N}, 215, 230, 225, 320, 330) au deuxième dispositif (110, 125_{1-N}, 215, 230, 225, 320, 330) comprend la transmission de l'adresse au deuxième dispositif (110, 125_{1-N}, 215, 230, 225, 320, 330) pour l'utilisation dans la détermination d'un chemin vers un emplacement correspondant aux informations d'adresse.

9. Appareil comprenant :
un processeur informatique ;
une surface tactile ; et
une mémoire contenant un code de programme informatique qui, quand il est exécuté par le processeur informatique, effectue les étapes de l'une quelconque des revendications 1 à 8.
